Europäisches Patentamt

European Patent Office

Office européen des brevets

(11) Veröffentlichungsnummer : **0 075 723**
**B1**

(12) # EUROPÄISCHE PATENTSCHRIFT

(45) Veröffentlichungstag der Patentschrift :
**09.10.85**

(51) Int. Cl.⁴ : **F 16 L 27/08**

(21) Anmeldenummer : **82107670.0**

(22) Anmeldetag : **21.08.82**

(54) **Vorrichtung zum Zuführen eines Druckmediums in eine Welle.**

(30) Priorität : **25.09.81 CH 6192/81**

(43) Veröffentlichungstag der Anmeldung :
**06.04.83 Patentblatt 83/14**

(45) Bekanntmachung des Hinweises auf die Patenterteilung : **09.10.85 Patentblatt 85/41**

(84) Benannte Vertragsstaaten :
**CH DE FR GB IT LI**

(56) Entgegenhaltungen :
**FR-E-    18 636**
**US-A- 3 098 662**
**US-A- 3 147 015**

(73) Patentinhaber : **MASCHINENFABRIK RIETER A.G.**
**Postfach 290**
**CH-8406 Winterthur (CH)**

(72) Erfinder : **Schlegel, Andy**
**Resedaweg 1**
**CH-8400 Winterthur (CH)**
Erfinder : **Busenhart, Peter**
**Härti 13**
**CH-8408 Winterthur (CH)**

**Beschreibung**

Die Erfindung bezieht sich auf eine Vorrichtung zum Zuführen eines Druckmediums in einen Einlasskanal einer Welle, welche Vorrichtung eine elastische Dichtung aufweist, die durch das einströmende Druckmedium an die Welle andruckbar ist. Soll eine Welle ein Druckmedium übertragen, oder ist die Welle mit irgendeinem durch ein Druckmedium betätigbaren Element beschickt, so muss der Uebergang zwischen dem Einlasskanal der Welle und den stationären Zufuhrelementen für das Druckmedium gegenüber der Atmosphäre abgedichtet sein.

In der Regel geschieht dies mit stationären Dichtungsringen, die mit einer oder mehreren Dichtkanten an der Welle anliegen, um ein Entweichen des zugeführten Druckmediums zu vermeiden.

Aus der US-Patentschrift Nr. 3147015 ist eine Vorrichtung zum Zuführen eines Druckmediums in einen Einlass einer Welle bekannt, welche eine Hohlwelle und ein daran herum drehbares rechtwinkliges Abzweigrohr umfasst. Die Welle weist im Bereich des Abzweigrohres zwei radiale Bohrungen als Verbindungsöffnungen zwischen dem Druckmedium führenden Innenraum der Hohlwelle und dem Innenraum des Abzweigrohres auf. Um einen Leckverlust des Druckmediums zwischen Abzweigrohr und Hohlwelle zu vermeiden, sind im Abzweigrohr zwei schlauchförmige Ringdichtungen vorgesehen, welche die Welle beidseits der radialen Bohrungen umfassen und auf dieser aufliegen. Diese Ringdichtungen sind vom zu übertragenden Druckmedium beschickbar, so dass sich die Anpresskraft der Ringdichtungen auf der Welle mit dem Druck des Mediums verändert.

Der Nachteil dieser Anordnung besteht darin, dass die Dichtungsringe dauernd, d. h. auch beim Drehen der Welle, an dieser anliegen und dadurch einem die Dichtigkeit verschlechternden Verschleiss unterworfen sind.

Hier will die Erfindung Abhilfe schaffen. Die Erfindung, wie sie in den Ansprüchen gekennzeichnet ist, löst die Aufgabe dadurch, dass die Dichtung eine elastische Dichtlippe umfasst, die durch das einströmende Druckmedium aus der Ruheposition in der sie von der Welle abgehoben ist in eine Arbeitsposition bewegbar ist, in der die Dichtlippe an der Welle anliegt und dadurch den Einlasskanal gegenüber der Atmosphäre abgedichtet.

Die Vorteile der Erfindung sind eine auf die Dauer praktisch unverminderte Dichtigkeit und eine wesentlich erhöhte Lebensdauer der Dichtringe.

Im folgenden wird die Erfindung anhand von zwei Ausführungswege darstellenden Zeichnungen näher erläutert.

Es zeigt :

Figur 1  einen Längsschnitt durch eine erfindungsgemässe Vorrichtung mit einem Dichtungselement in Ruheposition, halbschematisch dargestellt

Figur 2  den Längsschnitt von Fig. 1 mit dem Dichtungselement in Arbeitsposition

Figur 3  einen Querschnitt durch die Vorrichtung von Fig. 2, entlang den Linien I-I

Figur 4  einen Längsschnitt durch eine Variante der erfindungsgemässen Vorrichtung mit einem Dichtungselement in Ruheposition, halbschematisch dargestellt

Figur 5  den Längsschnitt von Fig. 3 mit dem Dichtungselement in Arbeitsposition

Figur 6  einen Querschnitt durch die Vorrichtung von Fig. 5, entlang den Linien II-II.

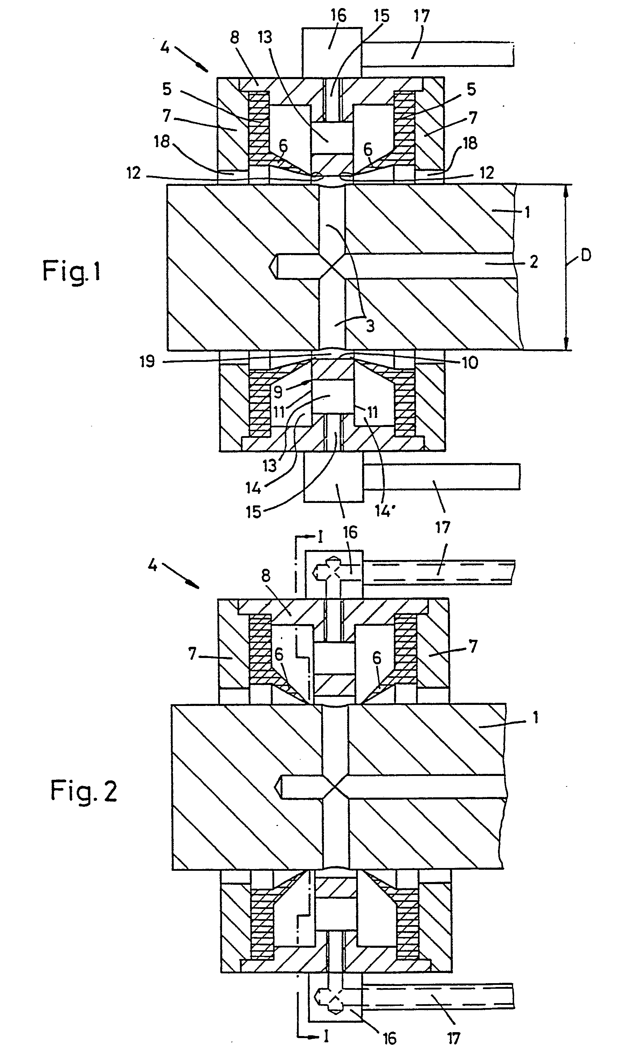

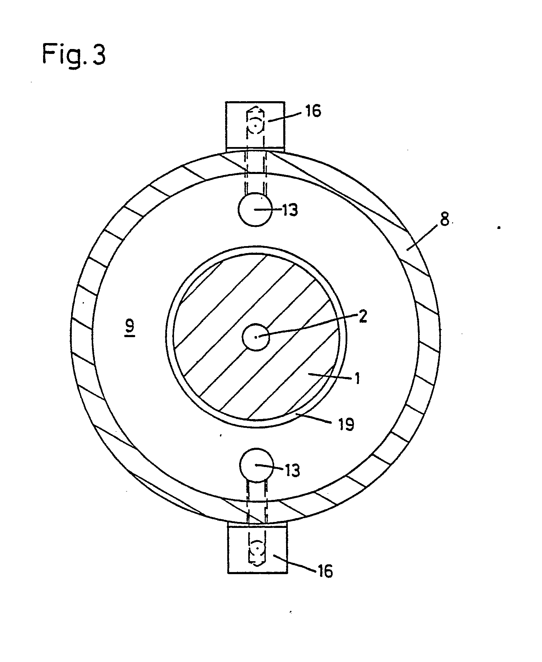

Eine drehbare Welle 1 (Fig. 1-3) hat einen Längskanal 2 für die Zufuhr eines Druckmediums, z. B. eines komprimierten Gases (z. B. Luft) an eine Verbraucherstelle (nicht gezeigt, beispielsweise einen Druckzylinder), sowie einen Querkanal 3 zur Verbindung des Längskanales 2 mit der Umgebung der Welle 1. Eine stationäre Vorrichtung 4 (Element zum Festhalten der Vorrichtung, nicht gezeigt) zum Zuführen des Druckmediums umfasst zwei Dichtungsringe 5, je mit einer ringförmigen Dichtungslippe 6. Diese Dichtungsringe 5 sind durch zwei Deckringe 7 und durch einen zwischen den Deckringen 7 vorgesehenen und mit diesem verbundenen Zwischenring 8 teilweise umfasst und festgehalten. Die Dichtungsringe 5 und die Deckringe 7 sind spiegelbildlich zueinander angeordnet. Die Dichtungslippen 6 sind elastisch verformbar.

Der Zwischenring 8 umfasst einen radial nach innen gerichteten ringförmigen Vorsprung 9 mit einer Zylinderfläche 10 und zwei einander gegenüberliegenden Seitenflächen 11. Die Dichtungslippen 6 liegen in einer Ruheposition je vorgespannt an durch die Zylinderfläche 10 und durch die Seitenflächen 11 gebildeten Kanten 12 an.

Zwei Querkanäle 13 verbinden die von den Dichtungen 5, dem Vorsprung 9 und dem Zwischenring 8 gebildeten ringförmigen Kammern 14, resp. 14' untereinander.

Ausserdem sind im Zwischenring 8 zwei mit Gewinde versehene Bohrungen 15 (Fig. 2) vorgesehen, die je in den Querkanal 13 münden. Das Gewinde der Bohrung 15 dient zur Aufnahme eines Anschlussnippels 16 für den Einlass des Druckmediums über eine daran angeschlossene Leitung 17.

Soll im Betrieb der Längskanal 2 mit dem Druckmedium beschickt werden, so werden, wie erwähnt, die Kammern 14, resp. 14', mit diesem Druckmedium gefüllt.

Durch den Druckanstieg in diesen Kammern werden die Lippen 6 aus der Anlage an den genannten Kanten in eine als Arbeitsposition der Dichtlippen benannte Anlage an der zylindrischen Oberfläche der Welle 1 verdrängt.

Durch die letztgenannte Anlage der Lippen 6 wird die Zufuhr des Druckmediums zum Kanal 2 gegenüber der Atmosphäre abgedichtet.

Für die Entlüftung des Kanales 2 wird zuerst die Leitung 17 entlüftet, d. h. drucklos gehalten, z. B. durch Umschalten eines daran angeschlossenen Ventiles (nicht gezeigt), so dass die Lippen 6 wieder in die Ruheposition zurückfedern und dabei den Weg für das entweichende Druckmedium durch je einen zwischen Welle 1 und den beiden Deckringen 7 gebildeten ringförmigen Spalt 18 freigeben.

Der sich aus der Differenz des Durchmessers der Zylinderfläche 10 und des Aussendurchmessers D der Welle 1 ergebende ringförmige Spalt 19 wird entsprechend der zu entlüftenden Luftmenge (m³/min.), der Bewegbarkeit der Lippen 6 sowie den Anforderungen an die Dichtigkeit gewählt.

Konkret wurde folgendes Beispiel durchgeführt :

| | |
|---|---|
| Welle 1 : | Aussendurchmesser 37 mm |
| Dichtungsring 5 : | Sukkufit Pa 101, ca. 90 Shore-Härte |
| Durchmesser Lippendichkante des freiliegenden Dichtungsringes : | 40 mm |
| der vorerwähnte Durchmesser des eingebauten Ringes : | 38 mm (d. h. die Lippen erhalten beim Einbau eine Vorspannung) |
| Betriebsdruck : | ~ 6 bar |
| benötigte Luftmenge bei 6 bar : | 0.2 dm³ |
| Entlüftung auf Atmosphärendruck : | in ca. 0.5 Sekunden |

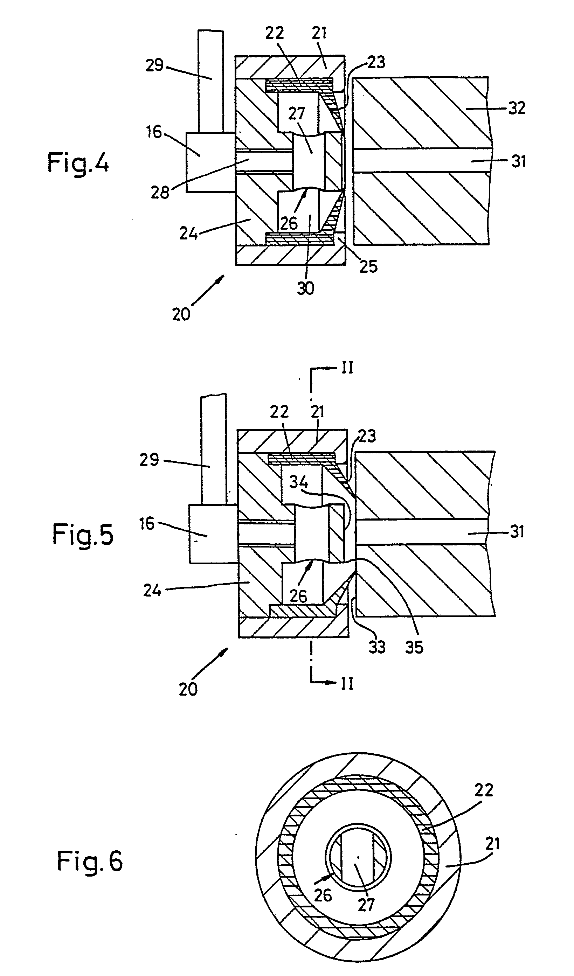

Eine weitere Vorrichtung 20 (Fig. 4-6) umfasst einen Stützring 21, einen Dichtungsring 22 mit einer ringförmigen Dichtungslippe 23 sowie einen Abschlusseinsatz 24. Der Stützring 21 dient zum radialen und zusammen mit dem Abschlusseinsatz 24 zum axialen Fixieren des Dichtungsringes 22.

Die teilweise Aufnahme des Dichtungsringes 22 durch den Stützring 21 geschieht durch einen radial nach innen gerichteten ringförmigen Absatz 25. Der Abschlusseinsatz 24 hat einen nach innen gerichteten zylindrischen Vorsprung 26 mit einer Stirnfläche 34. Ausserdem weist der Abschlusseinsatz einen Querkanal 27 auf, in den eine mit einem Gewinde versehene Bohrung 28 mündet.

Das Gewinde dieser Bohrung dient der Aufnahme des Anschlussnippels 16, für den Einlass des Druckmediums über eine daran angeschlossene Leitung 29.

Durch den Einsatz 24, den Dichtungsring 22, resp. die Dichtungslippe 23 und den Vorsprung 26, wird eine ringförmige Kammer 30 gebildet.

Dabei liegt die Dichtlippe 23 an einer durch den zylindrischen Vorsprung 26 und der dazugehörigen Stirnfläche 34 gegebenen kreisförmigen Kante 35 an.

Soll im Betrieb ein Längskanal 31 einer Welle 32 mit einem Druckmedium beschickt werden, so wird die Kammer 30 mit dem Druckmedium gefüllt und dadurch die Lippen 23 aus der Anlage an der Kante 35 in eine Anlage an einer der Vorrichtung 20 gegenüberliegenden Stirnfläche 33 der Welle 32 gebracht. Dadurch wird die Zufuhr des Druckmediums zum Kanal 31 gegenüber der Atmosphäre abgedichtet.

Die Entlüftung geschieht, wie für die Vorrichtung 4 beschrieben. Ebenfalls gilt für die zwischen der Stirnseite 34 und der Stirnseite 33 gewählte Spaltbreite, der für die Vorrichtung 4 erwähnte Grundsatz.

Beide Vorrichtungen sind sowohl für die Transferierung von Druckmitteln in stillstehenden wie auch in rotierenden Wellen geeignet. Der als Beispiel erwähnte Dichtungsring aus Sukkufit Pa 101 erträgt eine Umfangsgeschwindigkeit von 4 m/sec.

Ebenfalls ist die Erfindung für ein Gas wie auch für eine Flüssigkeit anwendbar.

Bei der Anwendung für Flüssigkeiten sind an sich bekannte Massnahmen, z. B. Auffangen und Sammeln der Leck- bzw. Austrittsflüssigkeit notwendig, während in der Anwendung für Luft der Vorteil besteht, dass die austretende Luft von der Atmosphäre aufgenommen werden kann.

**Patentansprüche**

1. Vorrichtung zum Zuführen eines Druckmediums in einen Einlasskanal einer Welle, welche Vorrichtung eine elastische Dichtung (5, 6 ; 22, 23) aufweist, die durch das einströmende Druckmedium an die Welle andrückbar ist, dadurch gekennzeichnet, dass die Dichtung (5 ; 22) eine elastische Dichtlippe (6 ; 23) umfasst, die vom einströmenden Druckmedium aus der Ruheposition (Fig. 1 und 4) in der sie von der Welle (1 ; 32/33) abgehoben ist, in eine Arbeitsposition (Fig. 2 und 5) bewegbar ist, in der die Dichtlippe an der Welle (1 ; 32/33) anliegt und dadurch den Einlasskanal (3 ; 31) gegenüber der Atmosphäre abdichtet.

2. Vorrichtung nach Anspruch 1, dadurch gekennzeichnet, dass für eine Welle (1) (Fig. 1-3) mit einem Einlasskanal (3) quer zur Wellenachse die Vorrichtung zwei koaxial zur Welle vorgesehene ringförmige Dichtungen (5) je mit einer ringförmigen Dichtlippe umfasst, die spiegelbildlich zueinander angeordnet den umfänglichen Bereich der Welle (1) beidseits des Einlasskanals (3) in Arbeitsposition (Fig. 2) gegenüber der Atmosphäre abdichten.

3. Vorrichtung nach Anspruch 1, dadurch gekennzeichnet, dass für eine Welle (32) (Fig. 4-6) mit einem Einlasskanal (31) längs zur Welle (32), die Dichtung (22), resp. die Dichtungslippe (23), gegenüber einer den Einlasskanal (31) beinhaltenden Stirnseite (33) der Welle (32) derart angeordnet ist, dass die Dichtungslippe (23) den Einlasskanal (31) in Arbeitsposition umrahmt und gegenüber der Atmosphäre abdichtet.

4. Vorrichtung nach Anspruch 1 und 2, dadurch gekennzeichnet, dass die Vorrichtung einen Vorsprung (9 ; 26) aufweist, an dem die Dichtungslippe (6 ; 23) in der Ruheposition unter Vorspannung anliegt.

5. Vorrichtung nach Anspruch 1-3, dadurch gekennzeichnet, dass die Vorrichtung mindestens eine Kammer (14, resp. 14' ; 30) aufweist, die in Ruheposition der Dichtungslippe (6 ; 23) gegenüber der Atmosphäre durch die Dichtungslippe verschlossen ist.

**Claims**

1. Device to supply a pressure medium in an entry passage of a shaft, which device has an elastic seal (5, 6 ; 22, 23) which can be pressed against the shaft by the inflowing pressure medium characterised in that the seal (5 ; 22) comprises an elastic sealing lip (6 ; 23) which is movable by the inflowing pressure medium from the rest position (Figures 1 and 4) in which it is spaced from the shaft (1 ; 23/33) into an operating position (Figures 2 and 5) in which the sealing lip engages the shaft (1 ; 32/33) and thereby seals off the entry passage from the atmosphere.

2. Device according to claim 1 characterised in that for a shaft (1) (Figures 1-3) with an entry passage (3) transverse to the shaft axis the device comprises two annular seals (5) provided coaxial to the shaft, each with an annular sealing lip, the seals being arranged mirror image fashion relative to each other to seal in the operating position (Figure 2) the peripheral region of the shaft (1) on both sides of the entry passage (13) from the atmosphere.

3. Device according to claim 1 characterised in that for a shaft (32) (Figures 4-6) with an entry passage (31) along the shaft (32) the seal (22) or the sealing lip (23) is so arranged with respect to an end face (33) of the shaft (32) containing the entry passage (31) that the sealing lip (23) encircles the entry passage (31) in the operating position and seals it from the atmosphere.

4. Device according to claim 1 and 2 characterised in that the device has a projection (9 ; 26) engaged by the sealing lip (6 ; 23) under bias in the rest position.

5. Device according to claims 1-3 characterised in that the device has at least one chamber (14 or 14' ; 30) which in the rest position of the sealing lip (6 ; 23) is closed off from the atmosphere by the sealing lip.

**Revendications**

1. Dispositif pour amener un média de pression dans un canal d'admission d'un arbre, dispositif qui possède un joint d'étanchéité élastique (5, 6 ; 22, 23) qui peut être pressé contre l'arbre par le média de pression qui s'écoule à l'intérieur (figures 1 à 4), caractérisé par le fait que le joint d'étanchéité (5 ; 22) comprend une lèvre d'étanchéité élastique (6 ; 23) qui, de la position de repos, dans laquelle elle est surélevée par rapport à l'arbre (1 ; 32/33), peut être bougée dans une position de travail par le média de pression qui s'écoule à l'intérieur, position de travail (figures 2 et 5) dans laquelle la lèvre d'étanchéité s'appuie contre l'arbre (1 ; 32/33) et, par cela, étanchéifie le canal d'admission (3 ; 31) par rapport à l'atmosphère.

2. Dispositif selon la revendication 1, caractérisé par le fait que, pour un arbre (1) (figures 1 à 3) avec un canal d'admission (3) transversal à l'axe de l'arbre, le dispositif présente deux joints d'étanchéité annulaires (5), coaxiaux à l'arbre, dont chacun des joints comprend une lèvre d'étanchéité en forme d'anneau, disposées symétriquement l'une par rapport à l'autre et qui, en position de travail (figure 2), étanchéifient, par rapport à l'atmosphère, la zone entourant l'arbre (1) de chaque côté du canal d'admission (3).

3. Dispositif selon la revendication 1, caractérisé par le fait que, pour un arbre (32) (figures 4 à 6) avec un canal d'admission (31) le long de l'arbre (32), le joint d'étanchéité (22) respectivement la lèvre d'étanchéité (23) est disposé(e) par rapport à une face frontale (33) de l'arbre (32) comprenant le canal d'admission (31), d'une façon telle que la lèvre d'étanchéité (23) entoure le canal d'admission (31) dans sa position de travail et l'étanchéifie par rapport à l'atmosphère.

4. Dispositif selon les revendications 1 et 2, caractérisé par le fait que le dispositif possède une saillie (9 ; 26) contre laquelle, en position de repos, la lèvre d'étanchéité (6 ; 23) vient s'appuyer par pré-tension.

5. Dispositif selon les revendications 1 à 3, caractérisé par le fait que le dispositif possède au moins une chambre (14 respectivement 14' ; 30) qui, dans la position de repos de la lèvre d'étanchéité (6 ; 23), est fermée par rapport à l'atmosphère par la lèvre d'étanchéité.

**0 075 723**

Fig.1

Fig. 2

Fig. 3

Fig.4

Fig.5

Fig.6